(19) Europäisches Patentamt European Patent Office Office européen des brevets

(11) **EP 4 035 829 B1**

(12) **EUROPEAN PATENT SPECIFICATION**

(45) Date of publication and mention of the grant of the patent:
**24.07.2024 Bulletin 2024/30**

(21) Application number: **20867294.9**

(22) Date of filing: **15.09.2020**

(51) International Patent Classification (IPC):
$G05B\ 13/02^{(2006.01)}$ $G05B\ 19/4155^{(2006.01)}$
$G05B\ 19/404^{(2006.01)}$ $B23Q\ 15/00^{(2006.01)}$
$G06N\ 20/00^{(2019.01)}$ $G05B\ 19/18^{(2006.01)}$
$G06N\ 3/084^{(2023.01)}$

(52) Cooperative Patent Classification (CPC):
**G05B 19/18; G05B 13/0265; G06N 3/084;**
G05B 2219/33037; G05B 2219/49061;
G05B 2219/49065; G05B 2219/49398;
G05B 2219/50211

(86) International application number:
**PCT/JP2020/034977**

(87) International publication number:
**WO 2021/060090 (01.04.2021 Gazette 2021/13)**

(54) **CONTROL SYSTEM**

STEUERUNGSSYSTEM

SYSTÈME DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2019 JP 2019173431**

(43) Date of publication of application:
**03.08.2022 Bulletin 2022/31**

(73) Proprietor: **Daikin Industries, Ltd.**
**Osaka-shi, Osaka 530-0001 (JP)**

(72) Inventors:
• **MATSUMOTO, Youji**
**Osaka-shi, Osaka 530-8323 (JP)**
• **HARADA, Masayuki**
**Osaka-shi, Osaka 530-8323 (JP)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
JP-A- 2012 027 710    JP-A- 2017 164 801
JP-A- 2018 097 680    JP-A- 2018 144 207
JP-A- 2019 025 561    JP-A- 2020 069 599
US-A1- 2015 161 520    US-A1- 2017 060 104
US-A1- 2017 270 434    US-A1- 2018 259 946
US-A1- 2019 275 629

**Description**

[Technical Field]

The present disclosure relates to a technique for controlling a machine tool.

[Background Art]

In machining using machine tools, adaptive control is used to control a feed speed of a tool in response to changes in a load torque applied to the tool in order to process a workpiece under optimum conditions.

On the other hand, due to recent advances in machine learning technology, machine learning models have been applied to various technical fields. For example, Japanese Patent Application Laid-Open No. 2018-153901 discloses, in a machine tool including a thermally expanding mechanical element, a machine learning device for setting a thermal displacement estimation calculation formula of the mechanical element and a thermal displacement compensation device for calculating a compensation amount of the mechanical element based on the set thermal displacement estimation calculation formula.

Patent Document 2 discloses a machine learning apparatus for learning laser machining condition data, and learning laser machining condition data in association with a state amount and a machine result.

Patent Document 3 discloses a numerical controller having a machining condition adjustment function to reduce chatter or tool wear/tool breakage, and that, when the quality of the machined-surface of a workpiece is better than a predetermined reference value, a positive reward may be given in a accordance with the degree of the quality being better, whereas, when the quality of machined-surface of the workpiece is worse than the predetermined reference value, a negative reward may be given in accordance with the degree of the quality being worse.

Patent Document 4 discloses a system for learning and optimizing semiconductor manufacturing processes, and discloses mathematical process models to be used in machine learning.

[Related-Art Documents]

[Patent Documents]

[Patent Document 1] Japanese Laid-Open Patent Publication No. 2018-153901
[Patent Document 2] US 2017/270434 A1
[Patent Document 3] US 2017/060104 A1
[Patent Document 4] US 2015/161520 A1

[Summary of the Invention]

[Problem to be Solved by the Invention]

However, in the conventional machine tool control techniques as described above, the quality of the manufactured workpiece is not considered.

This disclosure proposes machine tool control technique that takes into consideration the quality of the manufactured workpiece.

[Means to Solve the Problem]

The present invention provides a control method of claim 1 and a control system of claim 9. The dependent claims relate to special embodiments thereof.

[Brief Description of Drawings]

FIG. 1 is a schematic diagram illustrating a control process of a machine tool by a machine learning model according to an embodiment of the present disclosure;
FIG. 2 is a block diagram illustrating a functional configuration of a model generation apparatus according to the embodiment of the present disclosure;

FIG. 3 is a diagram illustrating an example of a multiple linear regression model according to the embodiment of the present disclosure;

FIG. 4 is a diagram illustrating an example of a neural network according to the embodiment of the present disclosure;

FIG. 5 is a flowchart illustrating a model generation process according to the embodiment of the present disclosure;

FIG. 6 is a block diagram illustrating a functional configuration of a controller according to the embodiment of the present disclosure;

FIG. 7 is a diagram illustrating an example of determination of command data by a multiple linear regression equation according to the embodiment of the present disclosure;

FIG. 8 is a flowchart illustrating a control process according to the embodiment of the present disclosure;

FIG. 9 is a block diagram illustrating a functional configuration of a control system according to the embodiment of the present disclosure;

FIG. 10 is a flowchart illustrating a control process according to the embodiment of the present disclosure;

FIG. 11 is a flowchart illustrating a control process according to the embodiment of the present disclosure; and

FIG. 12 is a block diagram illustrating a hardware configuration of the model generation apparatus, the controller, and the control system according to the embodiment of the present disclosure.

[Mode for Carrying Out the Invention]

Hereinafter, an embodiment will be described.

In the following embodiment, there is disclosed a model generation apparatus for generating a machine learning model for estimating a relationship between various state data relating to a machine tool (such as machining state data, equipment state data, and material state data) and accuracy data of a workpiece made by the machine tool, and a controller for controlling the machine tool using a machine learning model generated by the model generation apparatus.

<Outline of Present Disclosure>

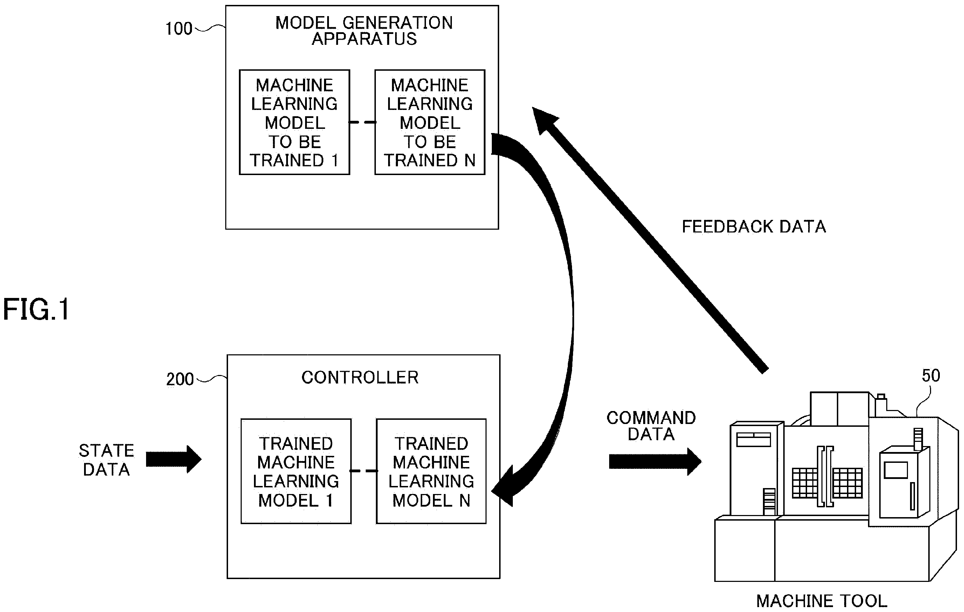

As illustrated in FIG. 1, a model generation apparatus 100 according to an embodiment of the present disclosure uses various state data related to a machine tool 50, such as machining state data, equipment state data, and material state data, and accuracy data of the machine tool 50 as training data. The model generation apparatus 100 trains machine learning models 1 to N that estimate a relationship between the state data and the accuracy data by using the training data. For example, the machine learning models to be trained 1 to N may include one or more of a multiple linear regression model, a multiple nonlinear regression model, and a neural network. After training the machine learning models 1 to N, the model generation apparatus 100 provides the trained machine learning models 1 to N to a controller 200. The controller 200 uses the trained machine learning models 1 to N to generate command data from the input state data for controlling the machine tool 50. The controller 200 controls the machine tool 50 according to the generated command data.

In this way, by incorporating not only the state data related to the machine tool 50 but also the accuracy data indicating the quality of the workpiece into the training of the machine learning model, the generated machine learning model can determine the command data for manufacturing the workpiece having consistent quality.

Further, accuracy data indicative of the quality of the workpiece machined by the machine tool controlled according to the relevant command data may be collected and the collected accuracy data may be provided to the model generation apparatus 100 as feedback data. In response to an occurrence of a predetermined updating event, such as the completion of the manufacture of one workpiece (work) by the machine tool 50, the model generation apparatus 100 may use the feedback data to retrain machine learning models 1 to N. As a result, command data appropriate to the state at each time point can be determined by using the machine learning models 1 to N which are retrained in a timely manner. Accordingly, a workpiece can be stably manufactured at the certain level of quality.

<Model Generation Apparatus>

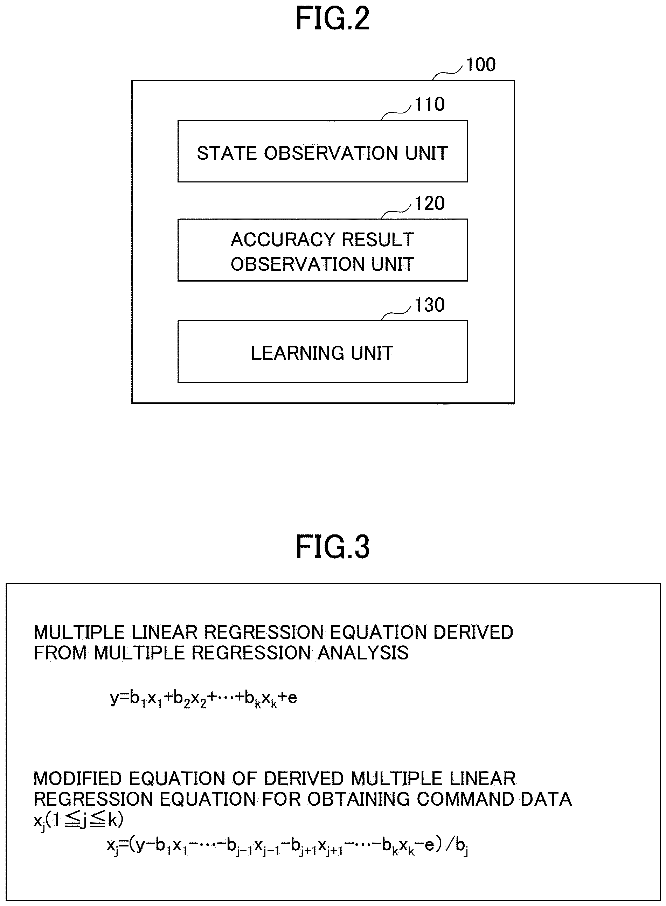

First, the model generation apparatus 100 according to the embodiment of the present disclosure will be described with reference to FIG. 2 to FIG. 4. FIG. 2 is a block diagram illustrating a functional configuration of the model generation apparatus 100 according to the embodiment of the present disclosure.

As illustrated in FIG. 2, the model generation apparatus 100 includes a state observation unit 110, an accuracy result observation unit 120, and a learning unit 130.

The state observation unit 110 collects state data related to the machine tool 50 including one or more of the machining state data, the equipment state data, and the material state data. Specifically, the state observation unit 110 acquires one or more of the machining state data, the equipment state data, and the material state data in advance at the time of the machining process of the workpiece (work) performed by the machine tool 50 in order to use the one of more of the machining state data, the equipment state data, and the material state data as the training data for training the machine learning models 1 to N.

For example, the machining state data may include one or more of a spindle motor load, each axis motor load, and spindle vibration of the machine tool 50, and a feed speed, a rotational speed, and a cutting depth, which are predetermined machining conditions at the time of machining the work. In this regard, spindle motor load, each axis motor load, and the spindle vibration relate to a machining load at the time of machining the workpiece by the machine tool 50, and the feed speed, the rotational speed, and the cutting depth relate to the machining conditions set by an operator or the like in the machining of the machine tool 50. Each data item of the machining conditions, such as the feed speed, the rotational speed, and the cutting depth are used by the controller 200 as command data for controlling the operation of the machine tool 50.

Further, the equipment condition data may include, for example, one or more of an ambient temperature inside or around the machine tool 50, a cooling water temperature, a cooling water flow rate, a cooling water concentration, a jig temperature, a spindle cooling oil temperature, a ball screw temperature, each axis servo motor temperature, a tool diameter, a tool length, a compensation amount of the tool diameter or the tool length, a tool usage frequency, a tool mounting state, and workpiece grasping power. In this regard, the temperature data such as the ambient temperature inside or around the machine tool 50, the cooling water temperature, the cooling water flow rate, the cooling water concentration, the jig temperature, the spindle cooling oil temperature, the ball screw temperature, and the motor temperature may be measured by mounting a sensor such as a thermometer, or state data measured by a sensor provided in advance by a machine tool manufacturer or a device manufacturer may be used. Further, tool-related data such as the tool diameter, the tool length, the compensation amount of the tool diameter or the tool length, the tool usage frequency, the tool mounting state, and the workpiece grasping power may be set or measured during installation and use of the tool. Note that each data item of the tool data, such as the tool diameter, the tool length, and the tool usage frequency may be used by the controller 200 as the command data for setting the machine tool 50.

Further, the material state data may include one or more of material hardness, material strength, and a pre-machined dimension. The material state data may be set or measured when the material is loaded into the machine tool 50.

The machining state data, the equipment state data, and the material state data are considered to affect the machining process performed by the machine tool 50, and the accuracy of the workpiece is considered to depend on the machining state data, the equipment state data, and the material state data. The state data, however, is not limited to the machining state data, the equipment state data, and the material state data, but may include any other appropriate data that is considered to affect the machining process performed by the machine tool 50 or the accuracy of the workpiece. The machining state data, the equipment state data, and the material state data are not limited to the data items described above, but may include any other appropriate data item that is considered to affect the machining process performed by the machine tool 50 or the accuracy of the workpiece. In the present embodiment, the machine tool 50 manufactures the workpiece by cutting or the like, but the machine tool 50 according to the present disclosure is not limited thereto, and may be an apparatus for machining, processing, manufacturing, or the like, for any other type of workpiece. Further, the machine tool 50 according to the present disclosure may be an apparatus that performs other types of machining, processing, manufacturing, or the like, such as grinding and plastic working. The state data may include appropriate data items for the machine tool 50 and the type of workpiece.

The accuracy result observation unit 120 acquires the accuracy data of the workpiece made by the machine tool 50. Specifically, the accuracy result observation unit 120, in order to use as training data for training the machine learning models 1 to N, measures the accuracy data that indicates the quality of the workpiece (work) manufactured by the machine tool 50 under the machining state, the equipment state, and the material state according to the above-described state data. For example, the accuracy data may include one or more of a dimension of the workpiece, surface roughness (such as surface flatness), and geometric accuracy after machining. The accuracy data can be generated and acquired by measuring the workpiece after machining with any appropriate measuring device or the like. The measured accuracy data is associated with the machining state data, the equipment state data, and the material state data at the time of the machining process.

The learning unit 130 trains the machine learning model based on the collected state data and the acquired accuracy data. Specifically, the learning unit 130 trains a plurality of machine learning models 1 to N by using the state data including one or more of the machining state data, the equipment state data, and the material state data collected in advance by the state observation unit 110 and the accuracy data acquired in advance by the accuracy result observation unit 120 as the training data.

In an embodiment, the machine learning models 1 to N may include one or more of the multiple linear regression model, the multiple nonlinear regression model, and the neural network.

For example, in training of the multiple linear regression model, numerous pairs of the state data and the accuracy data are prepared as the training data. The learning unit 130 executes multiple linear regression analysis on the prepared training data with each data item of the state data as an explanatory variable and the accuracy data as a response variable, and derives a linear regression equation with the value of the explanatory variable as an argument and the output value as the value of the response variable. Note that the multiple linear regression analysis is a well-known statistical analysis method, and the specific process for deriving the multiple linear regression equation will not be described here.

Further, the learning unit 130 may modify the derived multiple linear regression equation so that each data item of the command data output by the controller 200 (for example, the feed speed, the rotational speed, the cutting depth, the tool diameter, the tool length, the compensation amount of the tool diameter or the tool length, the tool usage frequency, or the like) becomes a solution, as follows. In general, as illustrated in FIG. 3, the multiple linear regression equation is expressed as below.

$$y=b_1x_1+b_2x_2+\cdots+b_kx_k+e$$

Here, $x_i$ is an explanatory variable representing each data item of the state data, and y is a response variable representing the accuracy data. Further, $b_i$ is a partial regression coefficient and e is an error. For example, when $x_j$ is an explanatory variable indicating a certain data item of the command data, the learning unit 130 modifies the multiple linear regression equation as below.

$$x_j=(y-b_1x_1-\cdots-b_{j-1}x_{j-1}-b_{j+1}x_{j+1}-\cdots-b_kx_k-e)/b_j$$

Accordingly, command data $x_j$ can be derived by the modification. In this manner, the learning unit 130 may modify the multiple linear regression equation for each data item $x_j$ of the command data as described above to derive a function of each data item $x_j$ of the command data.

In training the multiple nonlinear regression model, numerous pairs of the state data and the accuracy data are prepared as the training data. The learning unit 130 executes multiple nonlinear regression analysis on the prepared training data with each data item of the state data as an explanatory variable and the accuracy data as a response variable, and derives a nonlinear regression equation with the value of the explanatory variable as an argument and the output value as the value of the response variable. The multiple linear regression is represented in the form of a linear function, whereas the multiple nonlinear regression is represented in the form of quadratic or higher-order functions of the explanatory variables. In general, the multiple nonlinear regression equation is expressed as below.

$$y=f(x_1,x_2,\cdots,x_k)$$

For example, the multiple nonlinear regression equation may be expressed as below.

$$y=b_1x_1^{\alpha 1}+b_2x_2^{\alpha 2}+\cdots+b_kx_k^{\alpha k}+e$$

Here, $x_i$ is an explanatory variable representing each data item of the state data, and y is a response variable representing the accuracy data. Further, $b_i$ is a partial regression coefficient and e is an error. Further, $\alpha 1$, $\alpha 2$, $\cdots \alpha k$ are positive integers. Note that the multiple nonlinear regression analysis is also a well-known statistical analysis method, and the specific process for deriving the multiple linear regression equation will not be described here.

Unlike the multiple linear regression, the multiple nonlinear regression is not necessarily analytically solvable for explanatory variables. Therefore, for example, the values of the command data may be obtained by substituting the multiple nonlinear regression equation in which the values of the state data and the accuracy data other than the command data are derived with any numerical calculation technique.

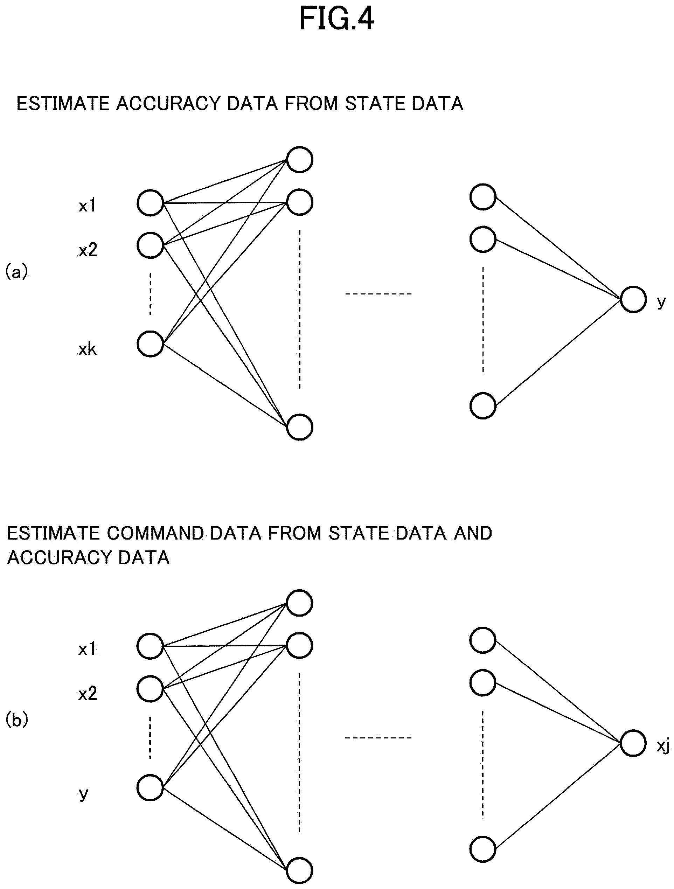

In neural network training, numerous pairs of the state data and the accuracy data are prepared as the training data. The learning unit 130 inputs the state data into a neural network including any appropriate network architecture and updates a parameter of the neural network according to the error between the output from the neural network and the accuracy data corresponding to the input state data, for example, by using the Backpropagation algorithm. The learning unit 130 repeats the parameter updating process described above and acquires the final neural network as a trained machine learning model once a predetermined termination condition is satisfied, such as completion of the parameter updating process for all prepared training data. As illustrated in (a) of FIG. 4, the trained machine learning model can estimate accuracy data y from state data $x_i (1 \leq i \leq k)$.

The learning unit 130 may also use the prepared training data to acquire a neural network that estimates command data from the state data and the accuracy data. For example, in order to provide a data item including the state data as the command data $x_j$, the learning unit 130 may use the state data $x_i$ other than the command data $x_j$ and the accuracy data y in the training data as input training data, and the command data $x_j$ as output training data to train a neural network including any appropriate network architecture. The neural network trained in this way can estimate the command data from state data and the accuracy data. In this manner, the learning unit 130 can acquire a trained machine learning model for estimating a value of the data item from the state data and the accuracy data with respect to each data item of the command data. As illustrated in (b) of FIG. 4, the trained machine learning model can estimate the command data $x_j$ from the state data $x_i$ ($1 \leq i \leq j-1$, $j+1 \leq i \leq k$) and the accuracy data y.

In the above-described embodiment, the accuracy data is composed of a single data item, but the accuracy data of the present disclosure is not limited thereto, and the accuracy data may be composed of multiple data items. In this case, the multiple regression equation is expressed as below.

$$Y_k = f_k(x_1, \; x_2, \; \cdots, \; x_k)$$

The neural network that outputs the accuracy data from the state data may be generated separately with respect to each data item of the accuracy data or may be configured with a network architecture that outputs all data items.

<Model Generation Process>

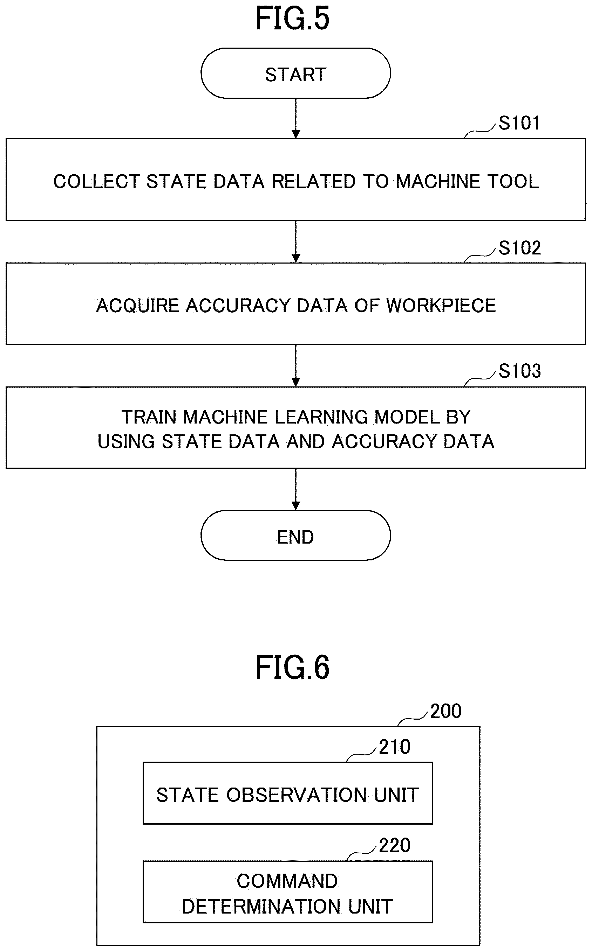

Next, a model generation process according to an embodiment of the present disclosure will be described with reference to FIG. 5. The model generation process is implemented by the model generation apparatus 100, and specifically, the model generation apparatus 100 may be implemented by a processor executing a program. FIG. 5 is a flowchart illustrating a model generation process according to the embodiment of the present disclosure.

As illustrated in FIG. 5, in step S101, the model generation apparatus 100 collects the state data related to the machine tool 50. Specifically, the model generation apparatus 100 collects the state data of the machine tool 50 in advance and stores the collected state data in a storage device such as a memory in order to use the state data as the training data of the machine learning model. For example, the state data may include one or more of the machining state data, the equipment state data, and the material state data of the machine tool 50. Further, the state data may be set by an operator of the machine tool 50, may be acquired during the machining process performed by the machine tool 50, or may be detected by a sensor.

In step S102, the model generation apparatus 100 acquires the accuracy data of the workpiece. Specifically, the model generation apparatus 100 acquires the accuracy data of the workpiece machined by the machine tool 50 under each state data and stores the acquired accuracy data in a storage device such as a memory in association with the state data in order to use the accuracy data as training data of the machine learning model. For example, the accuracy data may include one or more of the dimensions, roughness, and geometric accuracy of the workpiece after machining. Further, the accuracy data may be acquired from a measuring instrument or the like that measures the workpiece after machining. However, the accuracy data according to the present disclosure is not limited thereto and may indicate other appropriate data items according to the type of workpiece and the machine tool 50.

In step S103, the model generation apparatus 100 trains a machine learning model by using the state data and the accuracy data. Specifically, the model generation apparatus 100 uses the state data collected in step S101 and the accuracy data acquired in step S102 as the training data to generate the multiple linear regression analysis model, the multiple nonlinear regression analysis model, and the neural network.

In generating the multiple linear regression analysis model, the model generation apparatus 100 may derive a multiple linear regression equation using the state data as the explanatory variable, the accuracy data as the response variable. Then the model generation apparatus 100 may derive a function for obtaining each command data by modifying the derived multiple linear regression equation.

In generating the multiple nonlinear regression analysis model, the model generation apparatus 100 derives a multiple nonlinear regression equation using the state data as the explanatory variable and the accuracy data as the response variable. In this regard, if the derived multiple nonlinear regression equation is solved analytically, the model generation apparatus 100 may derive a function for obtaining each command data by modifying the derived multiple nonlinear regression equation.

In generating the neural network, the model generation apparatus 100 trains a neural network that outputs the accuracy data from the state data by the training data. Further, the model generation apparatus 100 may train a neural network that outputs each command data from the state data and the accuracy data based on the training data.

The model generation apparatus 100 provides a trained machine learning model to the controller 200 for subsequent control of the machine tool 50.

\<Controller\>

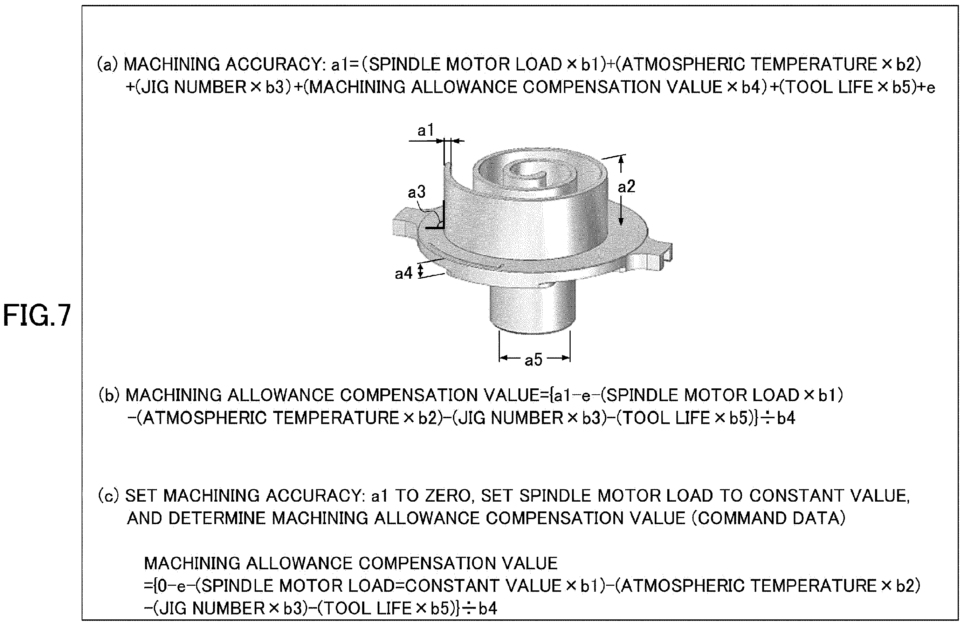

Next, the controller 200 according to an embodiment of the present disclosure will be described with reference to FIG. 6 and FIG. 7. The controller 200 controls the machining of the machine tool 50 with the machine learning model, by the model generation apparatus 100, which is trained by using the collected state data for the machine tool 50 and the accuracy data acquired with respect to the workpiece manufactured by the machine tool 50 as the training data. FIG. 6 is a block diagram illustrating a functional configuration of the controller 200 according to an embodiment of the present disclosure.

As illustrated in FIG. 6, the controller 200 includes a state observation unit 210 and a command determination unit 220.

The state observation unit 210 collects the state data related to the machine tool 50 including one or more of the machining state data, the equipment state data, and the material state data at the time of the machining process of the workpiece performed by the machine tool 50. Specifically, the state observation unit 210 collects one or more of the machining state data, the equipment state data, and the material state data before and during the machining process of the workpiece performed by the machine tool 50.

For example, the state observation unit 210 may collect, as the machining state data, one or more of the spindle motor load, each axis motor load, and the spindle vibration of the machine tool 50, and the feed speed, the rotational speed, and the cutting depth, which are the predetermined machining conditions at the time of machining the work. The spindle motor load, each shaft motor load, and the spindle vibration of the machine tool 50 may be collected from operating data of the machine tool 50 during the machining process of the workpiece, and the feed speed, the rotational speed, and the cutting depth may be set by an operator before the machining process of the workpiece.

The state observation unit 210 may collect, as the equipment state data, one or more of the ambient temperature inside or around the machine tool 50, the cooling water temperature, the cooling water flow rate, the cooling water concentration, the jig temperature, the spindle cooling oil temperature, the ball screw temperature, each axis servo motor temperature, the tool diameter, the tool length, the compensation amount of the tool diameter or the tool length, the tool usage frequency, the tool mounting state, and the workpiece grasping power. The ambient temperature, the cooling water temperature, the cooling water flow rate, the cooling water concentration, the jig temperature, the spindle cooling oil temperature, the ball screw temperature, each axis servo motor temperature may be collected by mounting a sensor such as a thermometer, before and during the machining process of the workpiece, or the state data measured by a sensor provided in advance by the machine tool manufacturer or the device manufacturer may be used. Further, tool-related data such as the tool diameter, the tool length, the compensation amount of the tool diameter or the tool length, the tool usage frequency, the tool mounting state, and the workpiece grasping power may be collected from the tool data of the tool before the machining process of the workpiece.

Further, the state observation unit 210 may collect one or more of the material hardness, the material strength, and the pre-machined dimension as the material state data. The material hardness, the material strength, and the pre-machined dimension may be extracted from the material state data in advance stored with respect to the material to be processed.

The command determination unit 220 determines the command data with respect to the machine tool 50 from the state data collected by the trained machine learning model. Specifically, the command determination unit 220 inputs the collected state data and the given accuracy data into the machine learning model by using the trained machine learning model provided from the model generation apparatus 100, and determines the command data for controlling the machine tool 50 from the machine learning model.

The command data may indicate the value of any data item of the state data to be used for the training data of the machine learning model, and may be, for example, the feed speed, the rotational speed, the cutting depth, the tool diameter, the tool length, the tool usage frequency, and the like. However, the command data according to the present disclosure is not limited thereto and may be any appropriate data item related to the control of the machine tool 50 according to the type of the workpiece and the machine tool 50.

For example, when a multiple linear regression equation as illustrated in (a) of FIG. 7 is derived by the multiple linear regression analysis of the model generation apparatus 100, the model generation apparatus 100 can derive an equivalent function for obtaining a machining allowance compensation value as the command data as illustrated in (b) of FIG. 7, by modifying the derived multiple linear regression equation. The command determination unit 220 can determine the machining allowance compensation value by the equation illustrated in (c) of FIG. 7 by setting a machining accuracy $a_1$ as the accuracy data to zero and setting the spindle motor load as the state data to a constant value in the function of the machining allowance compensation value illustrated in (b) of FIG. 7. The command determination unit 220 transmits the command data indicating the determined machining allowance compensation value to the machine tool 50. The machine tool 50 is considered to be capable of manufacturing a workpiece having a processing error of approximately zero by operating in accordance with the received machining allowance compensation value and the set value of the spindle motor load.

Although the determination process of the command data by the command determination unit 220 has been described herein with reference to the multiple linear regression analysis model, those skilled in the art will understand that the command data can be determined similarly on the basis of the multiple nonlinear regression analysis model and the neural network. For example, in the multiple nonlinear regression analysis model, the command determination unit 220 may input the value of the explanatory variable $x_i$ of the state data other than the explanatory variable $x_j$ of the command data and the set value of the response variable $y$ into the derived multiple nonlinear regression equation to calculate the value of the explanatory variable $x_j$ by numerical calculation. In the neural network, the command determination unit 220 may input the value of the state data $x_i$ other than the command data $x_j$ and the set value of the accuracy data $y$ to the trained neural network that outputs the command data $x_j$ to acquire the value of the command data $x_j$.

In one embodiment, the command determination unit 220 selects a multiple linear regression analysis model, a multiple nonlinear regression analysis model, or a neural network as the trained machine learning model by using an error between an estimated value of the accuracy data from the multiple linear regression analysis model, the multiple nonlinear regression analysis model, and the neural network with respect to the state data collected during the machining of the workpiece performed by the machine tool 50 and a measured value of the accuracy data of the workpiece after the machining performed by the machine tool 50. Specifically, when multiple trained machine learning models of the multiple linear regression analysis model, the multiple nonlinear regression analysis model, and the neural network are provided from the model generation apparatus 100, the command determination unit 220 determines the command data by using the trained machine learning model with the highest estimation accuracy among the provided trained machine learning models. For example, the command determination unit 220 compares the measurement result of the accuracy of the workpiece manufactured by the machine tool 50 under the control of the command data determined by using each of the multiple linear regression analysis model, the multiple nonlinear regression analysis model, and the neural network with an estimated value of the accuracy data of each of the multiple linear regression analysis model, the multiple nonlinear regression analysis model, and the neural network. Then, the command determination unit 220 may determine the command data for the subsequent machining process by using a machine learning model whose error is minimized.

<Control Process>

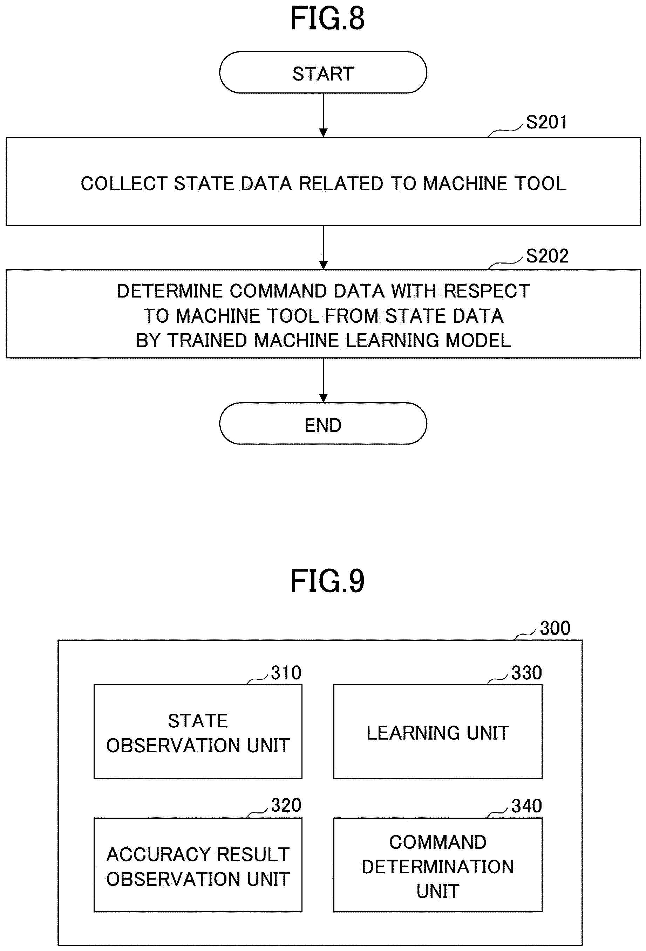

A control process according to an embodiment of the present disclosure will be described with reference to FIG. 8. The control process is implemented by the controller 200, and specifically, the control process may be implemented by a processor of the controller 200 executing a program. FIG. 8 is a flowchart illustrating the control process according to the embodiment of the present disclosure.

As illustrated in FIG. 8, in step S201, the controller 200 collects the state data for the machine tool 50. Specifically, the controller 200 collects the state data related to the machine tool 50 before and during the machining process performed by the machine tool 50 and stores the collected state data in a storage device such as a memory. For example, the state data may include one or more of the machining state data, the equipment state data, and the material state data of the machine tool 50. Further, the state data may be set by the operator of the machine tool 50, may be acquired during the machining process performed by the machine tool 50, or may be detected by a sensor.

In step S202, the controller 200 determines the command data with respect to the machine tool 50 from the state data by the trained machine learning model. Specifically, the controller 200 inputs the collected state data and the given accuracy data into the machine learning model by using the trained machine learning model provided from the model generation apparatus 100, and determines the command data for controlling the machine tool 50 from the machine learning model.

For example, when the trained multiple linear regression analysis model is used, the controller 200 may input the collected value of the state data other than the command data and the set value of the accuracy data into the multiple linear regression equation provided by the model generation apparatus 100 to calculate the value of the command data.

Further, when the trained multiple nonlinear regression analysis model is used, the controller 200 may input the collected value of the state data other than the command data and the set value of the accuracy data into the multiple nonlinear regression equation provided by the model generation apparatus 100 to calculate the value of the command data.

Further, when the trained neural network is used, the controller 200 may input the collected value of the state data other than the command data and the set value of the accuracy data into the neural network that outputs the command data provided from the model generation apparatus 100 to estimate the value of the command data.

The controller 200 transmits the command data determined in this way to the machine tool 50. When the measurement result indicating the accuracy of the workpiece manufactured under the control of the command data is acquired, the controller 200 may compare the acquired measurement result with the set value of the accuracy data, and use the machine learning model whose error is minimized to determine the command data in the subsequent machining process.

<Control System>

A control system 300 according to an embodiment of the present disclosure will be described with reference to FIG. 9 to FIG. 11. The control system 300 combines the functions of the model generation apparatus 100 and controller 200 described above to train the machine learning model and determine the command data by using the trained machine learning model. For example, the control system 300 may be implemented to include both the physical or functional configuration of the model generation apparatus 100 and the controller 200. FIG. 9 is a block diagram illustrating a functional configuration of the control system 300 according to the embodiment of the present disclosure.

As illustrated in FIG. 9, the control system 300 includes a state observation unit 310, an accuracy result observation unit 320, a learning unit 330, and a command determination unit 340.

The state observation unit 310 collects the state data related to the machine tool 50 including one or more of the machining state data, the equipment state data, and the material state data. Specifically, the state observation unit 310 collects the state data related to the machine tool 50 for collecting the training data for training the machine learning model. Further, the state observation unit 310 collects the state data related to the machine tool 50 before and during the machining process for control of the machine tool 50 that the trained machine learning model has been used.

The accuracy result observation unit 320 acquires the accuracy data of the workpiece made by the machine tool 50. Specifically, the accuracy result observation unit 320 collects the accuracy data of the workpiece manufactured by the machine tool 50 for collecting the training data for training the machine learning model. The accuracy result observation unit 320 collects the accuracy data of the workpiece manufactured by the machine tool 50 which is controlled in accordance with the command data determined by the command determination unit 340.

The learning unit 330 trains the machine learning model based on the collected state data and the acquired accuracy data. Specifically, the learning unit 330 trains the machine learning model to be used by the command determination unit 340 by using the training data including a pair of the state data collected by the state observation unit 310 and the accuracy data acquired by the accuracy result observation unit 320. For example, as described above, the machine learning model may include one or more of the multiple linear regression model, the multiple nonlinear regression model, and the neural network, and is trained with respect to the learning unit 130 of the model generation apparatus 100 as described above.

The command determination unit 340 determines the command data with respect to the machine tool 50 from the state data collected at the time of the machining process of the workpiece performed by the machine tool 50 with the trained machine learning model. Specifically, similarly to the command determination unit 220 of the controller 200, the command determination unit 340 determines the command data from the state data value related to the machine tool 50 collected before and during the machining process by the state observation unit 310 and the setting value of the accuracy data, by using the machine learning model trained by the learning unit 330. The command determination unit 340 transmits the determined command data to the machine tool 50.

In an embodiment, the command determination unit 340, when machining a workpiece a same portion of which is processed multiple times, may determine the command data, through the trained machine learning model, with respect to the machine tool 50 from the state data collected during the machining of the workpiece at a certain point in time before the final process among the multiple time of processes performed by the machine tool 50. Subsequently, the command determination unit 340 may cause the machine tool 50 to perform the final process with respect to the workpiece according to the command data. That is, in the machining of a general workpiece, the workpiece is gradually formed as a final product through multiple times of processes. Because a fine processing accuracy is required at the final process stage, a machine learning model may be trained and used for the final process. For example, the learning unit 330 may use the state data and the accuracy data at the time of the final process as the training data to train the machine learning model. The state observation unit 310 collects the state data of the workpiece at a certain point in time before the final process, and the command determination unit 340 determines the command data with respect to the machine tool 50 from the collected state data by using the trained machine learning model and transmits the command data to the machine tool 50. In this regard, the collected state data may include one or more of the spindle motor load and each shaft motor load of the machine tool 50. Upon receiving the command data, the machine tool 50 performs the final process with respect to the workpiece according to the received command data.

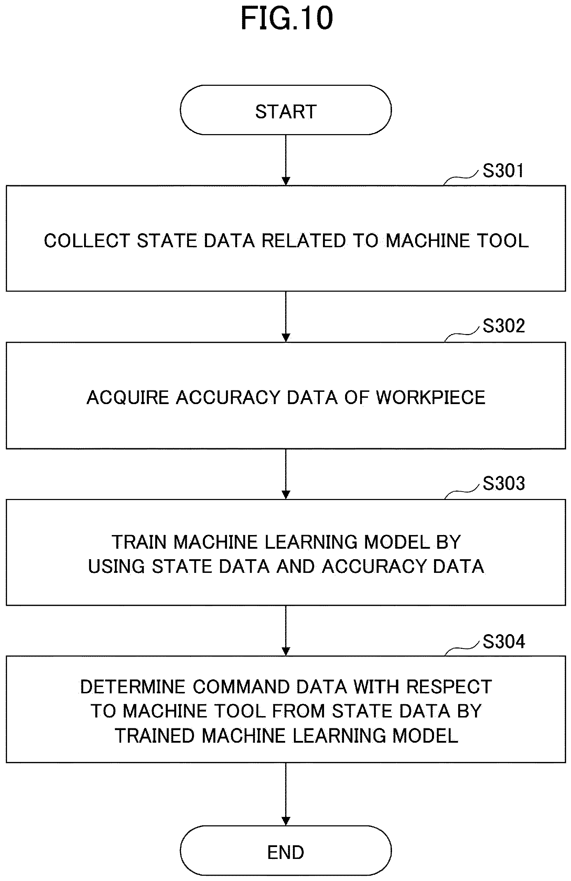

FIG. 10 is a flowchart illustrating a control process according to an embodiment of the present disclosure. The control process may be implemented by the control system 300, and specifically, the control process may be implemented by a processor of the control system 300 executing a program.

As illustrated in FIG. 10, in step S301, the control system 300 collects the state data related to the machine tool. Specifically, the control system 300 collects the state data related to the machine tool 50 in advance in order to use as the training data of the machine learning model. For example, the state data may include one or more of the machining state data, the equipment state data, and the material state data of the machine tool 50. Further, the state data may be set by the operator of the machine tool 50, may be acquired during the machining process performed by the machine tool 50, or may be detected by a sensor.

In step S302, the control system 300 acquires the accuracy data of the workpiece. Specifically, the control system 300 acquires the accuracy data of the workpiece machined by the machine tool 50 under each state data in order to use as the training data of the machine learning model. For example, the accuracy data may include one or more of the dimensions, the roughness, and the geometric accuracy of the workpiece after machining. Further, the accuracy data may be acquired from the measuring instrument or the like that measures the workpiece after machining. However, the accuracy data according to the present disclosure is not limited thereto and may indicate other appropriate data items according to the type of workpiece and the machine tool 50.

In step S303, the control system 300 trains the machine learning model with the state data and the accuracy data. Specifically, the control system 300 uses the state data collected in step S301 and the accuracy data acquired in step S302 as the training data to generate the multiple linear regression analysis model, the multiple nonlinear regression analysis model, and the neural network.

In step S304, the control system 300 determines the command data with respect to the machine tool 50 from the state data by the trained machine learning model. Specifically, the control system 300 inputs the collected state data and the given accuracy data into the machine learning model by using the machine learning model trained in step S303, and determines the command data for controlling the machine tool 50 from the machine learning model.

In an embodiment, the control system 300, when machining a workpiece the same portion of which is processed multiple times, may determine the command data, through the trained machine learning model, with respect to the machine tool 50 from the state data collected during the machining of the workpiece at a certain point in time before the final process among the multiple time of processes performed by the machine tool 50. Subsequently, the control system 300 may cause the machine tool 50 to perform the final process with respect to the workpiece according to the command data. The control system 300 may use the state data and the accuracy data at the time of the final process as the training data to train the machine learning model. In this regard, the collected state data may include one or more of the spindle motor load and each shaft motor load of the machine tool 50. The control system 300 collects the state data of the workpiece at a certain point in time before the final process, determines the command data with respect to the machine tool 50 from the collected state data by using the trained machine learning model, and transmits the command data to the machine tool 50. Upon receiving the command data from the control system 300, the machine tool 50 performs the final process with respect to the workpiece according to the received command data.

In an embodiment, the learning unit 330 may retrain the machine learning model at a predetermined retraining timing, and the command determination unit 340 may determine the command data by the machine learning model that has been retrained. For example, each time a predetermined number of workpieces are manufactured, the learning unit 330 may acquire the accuracy data of the workpiece manufactured from the accuracy result observation unit 320, incorporate the acquired accuracy data, the command data, and the state data used in the manufacture of the workpiece into existing training data. Then the learning unit 330 may retrain the machine learning model using the updated training data. The command determination unit 340 may determine the command data to be used for the subsequent machining process based on the retrained machine learning model. In this way, by dynamically retraining the machine learning model using the latest state data and accuracy data as the training data, the machine tool 50 can be controlled according to the more accurate command data.

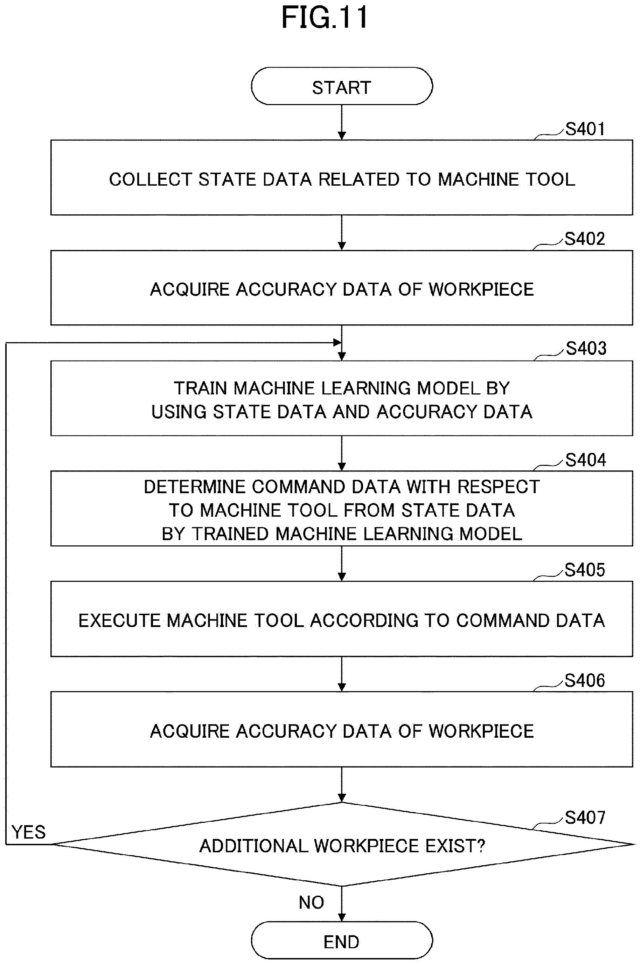

FIG. 11 is a flowchart illustrating a control process according to an embodiment of the present disclosure. The control process may be implemented by the control system 300, and specifically, the control process may be implemented by a processor of control system 300 executing a program. Steps S401 to S404 in FIG. 11 are the same as steps S301 to S304 in FIG. 10, and the description thereof will be omitted in order to avoid duplication.

In step S405, the control system 300 causes the machine tool 50 to perform the machining process according to the command data. Specifically, the control system 300 transmits the command data determined in step S404 to the machine tool 50 to control the operation of the machine tool 50.

In step S406, the control system 300 acquires the accuracy data of the workpiece manufactured by the machine tool 50. Specifically, the control system 300 causes the measuring instrument to measure the accuracy of the manufactured workpiece, and acquires the accuracy data that indicates the result of measurement from the measuring instrument.

In step S407, the control system 300 determines whether any additional workpiece exists, and, if any additional work exists (YES in step S407), returns to step S401 to retrain the machine learning model by using the accuracy data acquired in step S406. On the other hand, when there is no additional workpiece (NO in step S407), the control system 300 terminates the control.

As described above, when a machine learning model is used in the final process, the control system 300, before performing the final process of the workpiece, may use the state data and the accuracy data at the time of the final process of a predetermined number of recently processed workpiece as the training data to dynamically retrain the machine learning model. Then, the control system 300 may perform the final process of the workpiece by the retrained machine learning model. This enables the determination of the command data based on the machine learning model that has reflected the latest state data, and enables a more accurate final process.

<Hardware Configuration of Model Generation Apparatus and Controller>

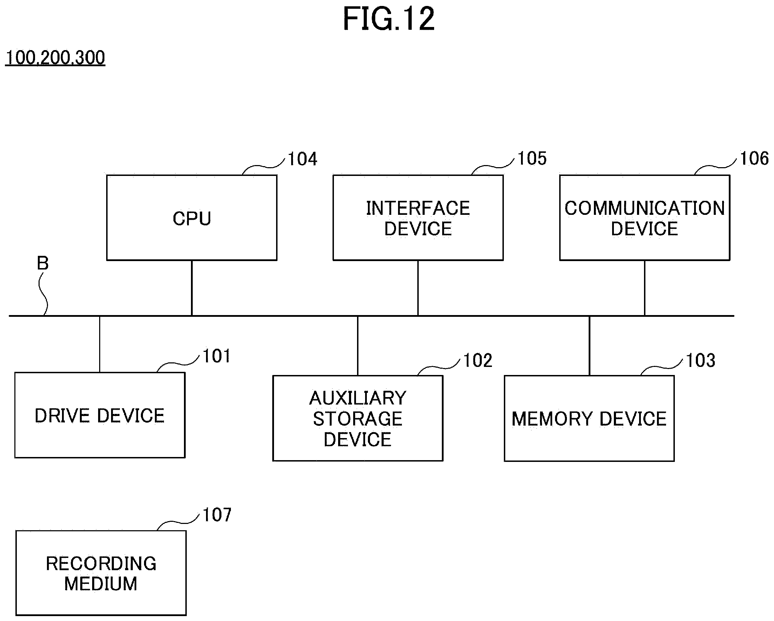

The model generation apparatus 100, the controller 200, and control system 300 may, for example, have a hardware configuration as illustrated in FIG. 12.

That is, the model generation apparatus 100, the controller 200, and the control system 300 include a drive device 101, an auxiliary storage device 102, a memory device 103, a central processing unit (CPU) 104, an interface device 105, and a communication device 106, which are connected with each other via a bus B.

Various computer programs including programs for implementing the various functions and processes described above in the model generation apparatus 100, the controller 200, and the control system 300 may be provided by a recording medium 107 such as a Compact Disk-Read Only Memory (CD-ROM). When the recording medium 107 on which the program is stored is set to the drive device 101, the program is installed in the auxiliary storage device 102 from the recording medium 107 through the drive device 101. However, the program need not necessarily be installed from the recording medium 107, and may be downloaded from any external device via a network or the like. The auxiliary storage device 102 stores the installed program and stores necessary files, data, and the like. The memory device 103 reads out and stores a program or data from the auxiliary storage device 102 when an instruction to start a program is issued. The CPU 104, which functions as a processor, performs various functions and processes of the model generation apparatus 100, the controller 200, and the control system 300 described above according to various data such as the program stored in the memory device 103 and the parameters necessary to execute the program. The interface device 105 is used as a communication interface for connecting to a network or an external device. The communication device 106 performs various communication processing for communicating with the external device.

However, the model generation apparatus 100, the controller 200, and the control system 300 are not limited to the hardware configurations described above, and may be implemented in any other suitable hardware configuration.

Although a description has been given of the embodiment, it may be understood that various modifications may be made to the configurations and details thereof, without departing from the scope of the claims.

[Description of Symbols]

50 machine tool
100 model generation apparatus
110, 210, 310 state observation unit
120, 320 accuracy result observation unit
130, 330 learning unit
200 controller
220, 340 command determination unit
300 control system

**Claims**

1. A control method implemented by a computer, comprising:

    collecting(S301) state data related to a machine tool, the state data including one or more of machining state data, equipment state data, and material state data; wherein the machining state data includes machining conditions at the time of machining a plurality of workpieces, and wherein the machining conditions are used as command data for controlling the operation of the machine tool,
    acquiring (S302) accuracy data of the plurality of workpieces a same portion of which is machined a plurality of times by the machine tool under the state data;
    generating and training (S303) a plurality of machine learning models by using the collected state data and the acquired accuracy data as training data, the plurality of machine learning models including a multiple linear regression analysis model, a multiple nonlinear regression analysis model, and a neural network;
    wherein the machines learning models are trained for estimating a relationship between various state data relating to a machine tool and accuracy data of a workpiece made by the machine tool,
    receiving a setting value of the accuracy data;
    collecting state data related to the machine tool before and during the machining process for controlling of the machine tool by using the trained machine learning model;

inputting, into the plurality of machine learning models, the state data collected during machining of a workpiece at a certain point in time before a final process among the plurality of times of processes performed by the machine tool and the received setting value of the accuracy data;

selecting, as a trained machine learning model, one of the multiple linear regression analysis model, the multiple nonlinear regression analysis model, and the neural network;

wherein the trained machine learning model is selected by using an error, for each of the manufactured workpieces, between a measured value of the accuracy data of the workpiece and an estimated value of the accuracy data of each of the multiple linear regression analysis model, the multiple nonlinear regression analysis model, and the neural network used for determining command value for manufacturing the workpiece by the machine tool, the trained machine learning model whose error is minimized being selected from among the multiple linear regression analysis model, the multiple nonlinear regression analysis model, and the neural network,

determining (S304), from the trained machine learning model, command data for causing the machine tool to perform the final process with respect to the workpiece; and
transmitting the command data to the machine tool.

2. The control method according to claim 1,
wherein the state data collected during the machining of the workpiece at the certain point in time before the final process among the plurality of times of processes includes one or more of a spindle motor load and each axis motor load being of the machine tool.

3. The control method according to any one of claims 1 to 2, wherein the machining state data includes one or more of a spindle motor load, each axis motor load, a spindle vibration, a feed speed, a rotational speed, and a cutting depth, the spindle motor load, the each axis motor load, and the spindle vibration being of the machine tool, and the feed speed, the rotational speed and the cutting depth being predetermined machining conditions at a time of machining a work.

4. The control method according to any one of claims 1 to 3, wherein the equipment state data includes one or more of an ambient temperature inside or around the machine tool, a cooling water temperature, a cooling water flow rate, a cooling water concentration, a jig temperature, a spindle cooling oil temperature, a ball screw temperature, each axis servo motor temperature, a tool diameter, a tool length, a compensation amount of the tool diameter or the tool length, a tool usage frequency, a tool mounting state, and workpiece grasping power.

5. The control method according to any one of claims 1 to 3, wherein the material state data includes one or more of material hardness, material strength, and a pre-machined dimension.

6. The control method according to any one of claims 1 to 5, wherein the accuracy data includes one or more of a dimension, roughness, and geometric accuracy being of the workpiece after machining.

7. The control method according to any one of claims 1 to 6, wherein in the training, the machine learning model is retrained at a predetermined retraining timing, and, in determining, in the determining, the command data is determined by the retrained machine learning model.

8. The control method according to any one of claims 1 to 7, wherein , in the determining, upon selecting a regression analysis model, the command data is determined by solving an inverse of a regression equation of the regression analysis model.

9. A control system comprising a processor configured to perform the control method according to any one of claims 1-8.

**Patentansprüche**

1. Computer-implementiertes Steuerungsverfahren, umfassend:

Sammeln (S301) von Zustandsdaten, die sich auf ein Maschinenwerkzeug beziehen, wobei die Zustandsdaten eines oder mehrere von Bearbeitungszustandsdaten, Ausrüstungszustandsdaten und Materialzustandsdaten beinhalten;

wobei die Bearbeitungszustandsdaten Bearbeitungsbedingungen zu der Zeit der Bearbeitung einer Vielzahl von Werkstücken beinhalten, und wobei die Bearbeitungsbedingungen als Befehlsdaten zur Steuerung des Betriebs des Maschinenwerkzeugs verwendet werden,

Erfassen (S302) von Genauigkeitsdaten der Vielzahl von Werkstücken, von denen ein gleicher Teil mehrmals durch das Maschinenwerkzeug unter den Zustandsdaten bearbeitet ist;

Erzeugen und Trainieren (S303) einer Vielzahl von Maschinenlernmodellen unter Verwendung der gesammelten Zustandsdaten und der erfassten Genauigkeitsdaten als Trainingsdaten, wobei die Vielzahl von Maschinenlernmodellen ein mehrfach lineares Regressionsanalysemodell, ein mehrfach nichtlineares Regressionsanalysemodell und ein neuronales Netzwerk beinhaltet;

wobei die Maschinenlernmodelle zum Schätzen einer Beziehung zwischen verschiedenen Zustandsdaten, die sich auf ein Maschinenwerkzeug beziehen, und Genauigkeitsdaten eines durch das Maschinenwerkzeug hergestellten Werkstücks trainiert werden,

Empfangen eines Einstellwerts der Genauigkeitsdaten;

Sammeln von Zustandsdaten, die sich auf das Maschinenwerkzeug beziehen, vor und während des Bearbeitungsprozesses zur Steuerung des Maschinenwerkzeugs unter Verwendung des trainierten Maschinenlernmodells;

Eingeben, in die Vielzahl von Maschinenlernmodellen, der Zustandsdaten, die während der Bearbeitung eines Werkstücks zu einem bestimmten Zeitpunkt vor einem letzten Prozess unter der Vielzahl von Malen von Prozessen, die durch das Maschinenwerkzeug durchgeführt werden, gesammelt wurden, und des empfangenen Einstellwerts der Genauigkeitsdaten;

Auswählen, als ein trainiertes Maschinenlernmodell, eines von dem mehrfach linearen Regressionsanalysemodell, dem mehrfach nichtlinearen Regressionsanalysemodell und dem neuronalen Netzwerk;

wobei das trainierte Maschinenlernmodell ausgewählt wird durch

Verwenden eines Fehlers, für jedes der hergestellten Werkstücke,

zwischen einem Messwert der Genauigkeitsdaten des Werkstücks und einem geschätzten Wert der Genauigkeitsdaten von jedem

des mehrfach linearen Regressionsanalysemodells, des mehrfach nichtlinearen Regressionsanalysemodells, und des neuronalen Netzwerks,

das zum Bestimmen des Befehlswerts zur Herstellung des Werkstückes durch das Maschinenwerkzeug verwendet wird, wobei das trainierte Maschinenlernmodell, dessen Fehler minimiert ist, aus dem mehrfach nichtlinearen Regressionslernmodell, dem mehrfach nichtlinearen Regressionslernmodell und dem neuronalen Netzwerk ausgewählt wird,

Bestimmen (S304), aus dem trainierten Maschinenlernmodell, von Befehlsdaten, um das Maschinenwerkzeug zu veranlassen, den letzten Prozess in Bezug auf das Werkstück durchzuführen; und

Übertragen der Befehlsdaten an das Maschinenwerkzeug.

2. Steuerungsverfahren nach Anspruch 1, wobei die Zustandsdaten, die während der Bearbeitung des Werkstücks zu dem bestimmten Zeitpunkt vor dem letzten Prozess unter der Vielzahl von Malen von Prozessen gesammelt wurden, eines oder mehrere von einer Spindelmotorlast und jeder Achsmotorlast des Maschinenwerkzeugs beinhalten.

3. Steuerungsverfahren nach einem der Ansprüche 1 bis 2, wobei die Bearbeitungszustandsdaten eines oder mehrere von einer Spindelmotorlast, jeder Achsmotorlast, einer Spindelvibration, einer Vorschubgeschwindigkeit, einer Rotationsgeschwindigkeit und einer Schnitttiefe beinhalten, wobei die Spindelmotorlast, die jede Achsmotorlast und die Spindelvibration von dem Maschinenwerkzeug sind, und wobei die Vorschubgeschwindigkeit, die Rotationsgeschwindigkeit und die Schnitttiefe vorbestimmte Bearbeitungsbedingungen zu einer Zeit der Bearbeitung eines Werkstücks sind.

4. Steuerungsverfahren nach einem der Ansprüche 1 bis 3, wobei die Ausrüstungszustandsdaten eines oder mehrere von einer Umgebungstemperatur innerhalb oder um das Maschinenwerk herum, einer Kühlwassertemperatur, einer Kühlwasserdurchflussrate, einer Kühlwasserkonzentration, einer Spannvorrichtungstemperatur, einer Spindelkühlöltemperatur, einer Kugelumlaufspindeltemperatur, jeder Achsservomotortemperatur, einem Werkzeugdurchmesser, einer Werkzeuglänge, einem Kompensationsbetrag des Werkzeugdurchmessers oder der Werkzeuglänge, einer Werkzeugnutzungsfrequenz, einem Werkzeugmontagezustand und einer Werkstückgreifleistung beinhalten.

5. Steuerungsverfahren nach einem der Ansprüche 1 bis 3, wobei die Materialzustandsdaten eines oder mehrere von einer Materialhärte, einer Materialfestigkeit und einer vorbearbeiteten Abmessung beinhalten.

**6.** Steuerungsverfahren nach einem der Ansprüche 1 bis 5, wobei die Genauigkeitsdaten eines oder mehrere von einer Abmessung, einer Rauheit und einer geometrischen Genauigkeit des Werkstücks nach der Bearbeitung beinhalten.

**7.** Steuerungsverfahren nach einem der Ansprüche 1 bis 6, wobei beim Trainieren das Maschinenlernmodell zu einem vorbestimmten Trainingszeitpunkt neu trainiert wird, und beim Bestimmen beim Bestimmen die Befehlsdaten durch das neu trainierte Maschinenlernmodell bestimmt werden.

**8.** Steuerungsverfahren nach einem der Ansprüche 1 bis 7, wobei beim Bestimmen beim Auswählen eines Regressionsanalysemodells die Befehlsdaten durch Lösen einer Umkehrung einer Regressionsgleichung des Regressionsanalysemodells bestimmt werden.

**9.** Steuerungssystem, umfassend einen Prozessor, der konfiguriert ist, um das Steuerungsverfahren nach einem der Ansprüche 1-8 durchzuführen.

## Revendications

**1.** Procédé de commande piloté par ordinateur, comprenant :

la collecte (S301) de données d'état relatives à une machine-outil, les données d'état comprenant une ou plusieurs de données d'état de l'usinage, de données d'état de l'équipement, et de données d'état du matériel ; les données d'état de l'usinage comprenant des conditions d'usinage au moment de l'usinage d'une pluralité de pièces, et les conditions d'usinage étant utilisées comme données de commande pour le contrôle de l'utilisation de la machine-outil,
la saisie (S302) de données de précision sur la pluralité de pièces, une même partie desquelles étant utilisée une pluralité de fois par la machine-outil d'après les données d'état ;
la production et la formation (S303) d'une pluralité de modèles d'apprentissage machine par l'utilisation des données d'état recueillies et des données de précision acquises comme données de formation, la pluralité de modèles d'apprentissage machine comprenant un modèle de multiples analyses de régression linéaire, un modèle de multiples analyses de régression non linéaire, et un réseau neuronal ;
les modèles d'apprentissage machine étant formés pour estimer un rapport entre différentes données d'état relatives à une machine outil et des données de précision d'une pièce produite par la machine-outil,
la réception d'une valeur de réglage des données de précision ;
la collecte de données d'état relatives à la machine-outil avant le processus d'usinage, et au cours de celui-ci, pour commander la machine-outil en utilisant le modèle d'apprentissage machine formé ;
l'entrée, dans la pluralité modèles d'apprentissage machine, des données d'état recueillies au cours de l'usinage d'une pièce à un moment donné avant un procédé final parmi la pluralité de temps de processus effectués par la machine-outil et la valeur de réglage reçue des données de précision ;
la sélection, en tant que modèle d'apprentissage machine formé, d'un du modèle de multiples analyses de régression linéaire, du modèle de multiples analyses de régression non linéaire, et du réseau neuronal ;
le modèle d'apprentissage machine formé étant sélectionné en utilisant une erreur, pour chacune des pièces fabriquées, entre une valeur mesurée des données de précision de la pièce et une valeur estimée des données de précision de chacun du modèle de multiples analyses de régression linéaire, du modèle de multiples analyses de régression non linéaire, et du réseau neuronal utilisés pour déterminer une valeur de commande pour la fabrication de la pièce par la machine-outil, le modèle d'apprentissage machine formé, dont l'erreur est minimisée, étant sélectionné parmi le modèle de multiples analyses de régression linéaire, le modèle de multiples analyses de régression non linéaire, et le réseau neuronal,
la détermination (S304), d'après le modèle d'apprentissage machine formé, de données de commande pour déterminer l'exécution, par la machine-outil, du processus final relativement à la pièce ; et
la transmission des données de commande à la machine-outil.

**2.** Procédé de commande selon la revendication 1, les données d'état recueillies au cours de l'usinage de la pièce au moment donné avant le processus final parmi la pluralité des temps de processus comprenant un ou plusieurs de la charge du moteur de la broche et de la charge du moteur de chaque axe de la machine-outil.

**3.** Procédé de commande selon une quelconque des revendications 1 à 2, les données d'état de l'usinage comprenant une ou plusieurs des suivantes : charge du moteur de la broche, charge du moteur de chaque axe, une vibration

EP 4 035 829 B1

de la broche, une vitesse d'avance, une vitesse de rotation, et une profondeur de coupe, la charge du moteur de la broche, la charge du moteur de chaque axe, et la vibration de la broche étant de la machine-outil, et la vitesse d'avance, la vitesse de rotation, et la profondeur de coupe étant des conditions d'usinage prédéterminées au moment de l'usinage d'une pièce.

4. Procédé de commande selon une quelconque des revendications 1 à 3, les données d'état de l'équipement comprenant un ou plusieurs d'une température ambiante à l'intérieur ou autour de la machine-outil, d'une température de l'eau de refroidissement, d'un débit de l'eau de refroidissement, d'une concentration de l'eau de refroidissement, de la température d'un gabarit, de la température de l'huile de refroidissement d'une broche, de la température d'une vis à billes, de la température du servomoteur de chaque axe, du diamètre d'un outil, de la longueur d'un outil, d'une valeur de compensation du diamètre d'un outil ou de la longueur d'un outil, de la fréquence d'utilisation d'un outil, d'un état de montage d'un outil, et de la puissance de saisie de la pièce.

5. Procédé de commande selon une quelconque des revendications 1 à 3, les données d'état du matériau comprenant une ou plusieurs de la dureté du matériau, de la résistance du matériau, et d'une dimension pré-usinage.

6. Procédé de commande selon une quelconque des revendications 1 à 5, les données de précision comprenant une ou plusieurs d'une dimension, de la rugosité, et de la précision géométrique de la pièce après l'usinage.

7. Procédé de commande selon une quelconque des revendications 1 à 6, dans lequel, au cours de la formation, le modèle d'apprentissage de la machine est reformé à une échéance de reformation prédéterminée, et, dans le cadre de la détermination, les données de commande sont déterminées par le modèle reformé d'apprentissage de la machine.

8. Procédé de commande selon une quelconque des revendications 1 à 7, dans lequel, dans la détermination, lors de la sélection d'un modèle d'analyse de la régression, les données de commande sont déterminées en résolvant un inverse d'une équation de régression du modèle d'analyse de régression.

9. Un système de commande comprenant un processeur configuré pour effectuer le procédé de commande selon une quelconque des revendications 1 à 8.

# FIG.1

**MODEL GENERATION APPARATUS** 100

| MACHINE LEARNING MODEL TO BE TRAINED 1 | — | MACHINE LEARNING MODEL TO BE TRAINED N |

FEEDBACK DATA

**CONTROLLER** 200

STATE DATA →

| TRAINED MACHINE LEARNING MODEL 1 | — | TRAINED MACHINE LEARNING MODEL N |

COMMAND DATA →

50

MACHINE TOOL

# FIG.2

100

110

STATE OBSERVATION UNIT

120

ACCURACY RESULT
OBSERVATION UNIT

130

LEARNING UNIT

# FIG.3

MULTIPLE LINEAR REGRESSION EQUATION DERIVED
FROM MULTIPLE REGRESSION ANALYSIS

$$y=b_1x_1+b_2x_2+\cdots+b_kx_k+e$$

MODIFIED EQUATION OF DERIVED MULTIPLE LINEAR
REGRESSION EQUATION FOR OBTAINING COMMAND DATA
$x_j(1 \leqq j \leqq k)$

$$x_j=(y-b_1x_1-\cdots-b_{j-1}x_{j-1}-b_{j+1}x_{j+1}-\cdots-b_kx_k-e)/b_j$$

# FIG.4

ESTIMATE ACCURACY DATA FROM STATE DATA

(a)

ESTIMATE COMMAND DATA FROM STATE DATA AND
ACCURACY DATA

(b)

# FIG.5

START

S101

COLLECT STATE DATA RELATED TO MACHINE TOOL

S102

ACQUIRE ACCURACY DATA OF WORKPIECE

S103

TRAIN MACHINE LEARNING MODEL BY
USING STATE DATA AND ACCURACY DATA

END

# FIG.6

200

210

STATE OBSERVATION UNIT

220

COMMAND
DETERMINATION UNIT

FIG.7

(a) MACHINING ACCURACY: a1=(SPINDLE MOTOR LOAD × b1)+(ATMOSPHERIC TEMPERATURE × b2)
+(JIG NUMBER × b3)+(MACHINING ALLOWANCE COMPENSATION VALUE × b4)+(TOOL LIFE × b5)+e

(b) MACHINING ALLOWANCE COMPENSATION VALUE={a1-e-(SPINDLE MOTOR LOAD × b1)
-(ATMOSPHERIC TEMPERATURE × b2)-(JIG NUMBER × b3)-(TOOL LIFE × b5)}÷b4


(c) SET MACHINING ACCURACY: a1 TO ZERO, SET SPINDLE MOTOR LOAD TO CONSTANT VALUE,
AND DETERMINE MACHINING ALLOWANCE COMPENSATION VALUE (COMMAND DATA)

MACHINING ALLOWANCE COMPENSATION VALUE
={0-e-(SPINDLE MOTOR LOAD=CONSTANT VALUE × b1)-(ATMOSPHERIC TEMPERATURE × b2)
-(JIG NUMBER × b3)-(TOOL LIFE × b5)}÷b4

# FIG.8

```
START
```

↓

S201

COLLECT STATE DATA RELATED TO MACHINE TOOL

↓

S202

DETERMINE COMMAND DATA WITH RESPECT
TO MACHINE TOOL FROM STATE DATA
BY TRAINED MACHINE LEARNING MODEL

↓

```
END
```

# FIG.9

300

310
STATE
OBSERVATION UNIT

330
LEARNING UNIT

320
ACCURACY RESULT
OBSERVATION UNIT

340
COMMAND
DETERMINATION
UNIT

# FIG.10

```
        ┌─────────────┐
        │    START    │
        └──────┬──────┘
               │              ⌒S301
        ┌──────▼──────────────────────────────┐
        │ COLLECT STATE DATA RELATED TO MACHINE TOOL │
        └──────┬──────────────────────────────┘
               │              ⌒S302
        ┌──────▼──────────────────────────────┐
        │   ACQUIRE ACCURACY DATA OF WORKPIECE │
        └──────┬──────────────────────────────┘
               │              ⌒S303
        ┌──────▼──────────────────────────────┐
        │      TRAIN MACHINE LEARNING MODEL BY │
        │    USING STATE DATA AND ACCURACY DATA │
        └──────┬──────────────────────────────┘
               │              ⌒S304
        ┌──────▼──────────────────────────────┐
        │ DETERMINE COMMAND DATA WITH RESPECT  │
        │ TO MACHINE TOOL FROM STATE DATA BY   │
        │ TRAINED MACHINE LEARNING MODEL       │
        └──────┬──────────────────────────────┘
               │
        ┌──────▼──────┐
        │     END     │
        └─────────────┘
```

# FIG.11

```
                    ┌─────────────┐
                    │    START    │
                    └──────┬──────┘
                           │                         ┌─ S401
           ┌───────────────▼───────────────────────────────┐
           │    COLLECT STATE DATA RELATED TO MACHINE TOOL  │
           └───────────────┬───────────────────────────────┘
                           │                         ┌─ S402
           ┌───────────────▼───────────────────────────────┐
           │       ACQUIRE ACCURACY DATA OF WORKPIECE       │
           └───────────────┬───────────────────────────────┘
                           │                         ┌─ S403
           ┌───────────────▼───────────────────────────────┐
           │         TRAIN MACHINE LEARNING MODEL BY        │
           │      USING STATE DATA AND ACCURACY DATA        │
           └───────────────┬───────────────────────────────┘
                           │                         ┌─ S404
           ┌───────────────▼───────────────────────────────┐
           │     DETERMINE COMMAND DATA WITH RESPECT        │
           │       TO MACHINE TOOL FROM STATE DATA          │
           │      BY TRAINED MACHINE LEARNING MODEL         │
           └───────────────┬───────────────────────────────┘
                           │                         ┌─ S405
           ┌───────────────▼───────────────────────────────┐
           │  EXECUTE MACHINE TOOL ACCORDING TO COMMAND DATA│
           └───────────────┬───────────────────────────────┘
                           │                         ┌─ S406
           ┌───────────────▼───────────────────────────────┐
           │       ACQUIRE ACCURACY DATA OF WORKPIECE       │
           └───────────────┬───────────────────────────────┘
                           │                         ┌─ S407
   YES                     ▼
    ◄──────────◄ ADDITIONAL WORKPIECE EXIST? ►
                           │ NO
                    ┌──────▼──────┐
                    │     END     │
                    └─────────────┘
```

# FIG.12

100,200,300

EP 4 035 829 B1

**EP 4 035 829 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018153901 A
- US 2017270434 A1
- US 2017060104 A1
- US 2015161520 A1